# EUROPÄISCHE PATENTSCHRIFT

(11) **EP 4 339 036 B1**
(45) Veröffentlichungstag und Bekanntmachung des Hinweises auf die Patenterteilung: **22.10.2025**
(21) Anmeldenummer: 23192056.2
(22) Anmeldetag: 18.08.2023
(51) Int. Cl.: B60R 19/34

(54) **KRAFTFAHRZEUG MIT STOSSFÄNGERANORDNUNG**
MOTOR VEHICLE WITH BUMPER ARRANGEMENT
VÉHICULE AUTOMOBILE AVEC AGENCEMENT DE PARE-CHOCS

(30) Priorität: 15.09.2022 DE 102022123604
(43) Veröffentlichungstag der Anmeldung: 20.03.2024
(73) Patentinhaber: GEDIA Gebrüder Dingerkus GmbH, 57439 Attendorn (DE)
(72) Erfinder: Berger, Marvin, 57368 Lennestadt (DE)
(74) Vertreter: Köchling, Marietta

(56) Entgegenhaltungen:
- JP-A- 2019 104 464
- JP-B2- 4 685 819
- US-A1- 2018 370 470
- US-A1- 2020 384 934

## Beschreibung

Die Erfindung betrifft ein Kraftfahrzeug mit mindestens einer Stoßfängeranordnung, wobei eine erste Stoßfängeranordnung einen ersten Stoßfängerquerträger aufweist und mindestens zwei voneinander beabstandete erste Crashboxen, die jeweils mit einem ersten Ende an einem der beiden endnahen Bereiche des Stoßfängerquerträgers befestigt sind und die jeweils mit einem zweiten Ende an Teilen der Fahrzeugstruktur befestigt sind.

Im Stand der Technik bekannte Kraftfahrzeuge weisen mindestens eine Stoßfängeranordnung auf, die üblicherweise aus einem Stoßfängerquerträger und zwei Crashboxen besteht, die zwischen dem Stoßfängerquerträger und der Fahrzeugstruktur angeordnet sind. Die Stoßfängeranordnung, insbesondere die Crashboxen, nimmt bzw. nehmen bei einem Aufprall einen Teil der auf das Fahrzeug einwirkenden Energie auf, sodass ein durch den Aufprall resultierender Schaden an der Fahrzeugstruktur bzw. an den Fahrzeuginsassen reduziert oder sogar verhindert werden kann.

Es sind unterschiedliche Crashboxen bekannt. Beispielsweise können diese aus einteiligen oder mehrteiligen Hohlprofilabschnitten gefertigt sein. Bei einer mehrteiligen Ausgestaltung werden mehrere Blechteile zu einem Hohlprofilabschnitt miteinander verbunden, was vorzugsweise durch ein Verschweißen zweier Halbschalen aus Blech erfolgen kann.

Die Hohlprofilabschnitte weisen stirnseitig offene Enden auf, wobei ein erstes Ende an dem Stoßfängerquerträger bzw. an einem am Stoßfängerquerträger angeordneten Halter angeschweißt oder angeschraubt wird und das gegenüberliegende zweite Ende oder eine an dem zweiten Ende angeschweißte Platte an der Fahrzeugstruktur, beispielsweise einem Längsträger verschweißt oder mit diesem verschraubt wird.

Die bekannten Crashboxen weisen durch ihre geschlossene Profilform und die ggf. mehrteilige Ausgestaltung ein relativ hohes Eigengewicht auf. In den Innenraum der an sich geschlossenen Hohlprofile kann Feuchtigkeit oder auch Schmutz z.B. durch Spalte eintreten und zu Korrosion führen. Um Korrosion zu vermeiden, kann der Hohlraum der Crashboxen mit einer Korrosionsschutzschicht beschichtet werden, die z.B. ein Lack ist. Damit überschüssiger Lack nach dem Auftragen abtropfen kann, müssen entsprechende Abtropflöcher in den Wandungen der Crashboxen eingebracht werden. Sofern eine Crashbox aus mehreren Teilen zusammengesetzt ist, müssen die Teile miteinander verbunden werden, beispielsweise indem die Teile miteinander verschweißt werden, was aufwändig ist und wodurch ggf. unerwünschte Schwachstellen in das Material eingebracht werden.

Die JP 2019 104464 A offenbart eine Crashbox aus einem u-förmigen Profilabschnitt, wobei der Profilabschnitt stirnseitig mit einer umgeschlagenen angeformten Lasche an einem Stoßfängerquerträger befestigt wird.

Die Aufgabe der Erfindung liegt darin ein Fahrzeug mit einer verbesserten Stoßfängeranordnung zu schaffen, die ein geringes Eigengewicht aufweist und die einfach und kostengünstig herstellbar ist. Die Bauteile der Stoßfängeranordnung sollen bei einem Aufprall in der Weise verformt werden, dass ein besonders geringer Schaden an der Fahrzeugstruktur, sowie an den Fahrzeuginsassen entsteht. Gleichzeitig soll durch eine gezielte Verformung der Stoßfängeranordnung auch der Fußgängerschutz verbessert werden, also Verletzungen von Fußgängern bei einer Kollision mit dem Fahrzeug verringert werden.

Zur Lösung der Aufgabe schlägt die Erfindung ein Kraftfahrzeug nach Anspruch 1 vor.

Die Crashbox weist eine einteilige Rinnenform in der Art eines offenen Hohlprofils auf, sodass ein aufwändiges Verbinden mehrerer Teile durch ein Verschweißen solcher Teile entfällt und die Crashbox ein besonders geringes Eigengewicht aufweist. Sofern eine Beschichtung der Crashbox beispielsweise mit einem Korrosionsschutzlack erfolgt, kann überschüssiger Lack in einfacher Weise aus dem einseitig offenen Hohlraum abtropfen ohne dass Ablauföffnungen oder Löcher in eine der Wandungen eingebracht werden müssen.

Die angeformte Lasche ermöglicht eine besonders einfache und kostengünstige Anbindung der Crashbox an den Stoßfängerquerträger, da auf zusätzliche Bauteile zum Verbinden der Crashbox mit dem Stoßfängerquerträger verzichtet werden kann. Auch bei der Herstellung des Querträgers kann auf eine Anbringung einer zusätzlichen Halterung für die Crashboxen verzichtet werden.

Die einseitig offenen Profilabschnitte können in der Weise in die Stoßfängeranordnung integriert sein, dass deren dem Rinnengrund gegenüberliegende Rinnenöffnung vorzugsweise nach unten, in Richtung der Aufstandsebene des Fahrzeugs, hin gerichtet ist. Beim Aufprall wird die an dem Rinnengrund angeformte Lasche, die sich mindestens bis zur Fluchtlinie der Schenkel oder auch darüber hinaus erstreckt, gegen die Stirnseiten der Schenkel gedrückt, sodass die Schenkel und mit diesen der gesamte Profilabschnitt in Fahrzeuglängsrichtung zum Fahrzeug hin gedrückt und verformt wird. Da die Crashboxen im Bereich der Rinnenöffnung durch die in diesem Bereich fehlende Wandfläche einen geringeren Widerstand aufweisen, wird die Crashbox in diesem Bereich leichter verformt. Dabei wird die Crashbox im Wesentlichen in Fahrzeuglängsrichtung (x-Achse) gestaucht. Ein Drehen der Crashbox um die Fahrzeugquerachse (y-Achse) ist vorzugsweise vollständig unterbunden, sodass ein bloßes abknicken der Crashboxen verhindert ist und eine optimale Energieaufnahme erfolgen kann. Der an den Crashboxen befestigte Stoßfängerquerträger folgt dieser Bewegung.

Die Ausrichtung der Rinnenöffnung wirkt sich somit erheblich auf die Verformungsrichtung der Crashboxen sowie des Stoßfängerquerträgers aus, wobei die Ausrichtung in einer beliebigen anderen Richtung erfolgen kann, um die Stoßfängeranordnung an einen entsprechenden Anwendungsbereich anzupassen.

Es ist zudem erfindungsgemäß vorgesehen, dass jede Lasche die Stirnseiten der Schenkel zumindest abdeckt oder seitlich über die Flächen der Schenkel vorragt, sodass die Laschen bei Krafteinwirkung beim Aufprall gegen die Schenkel der Crashboxen drücken und diese in Richtung zum Fahrzeug hin verformt werden.

Vorzugsweise ist dabei vorgesehen, dass jeder Profilabschnitt am stirnseitigen zweiten Ende eine quer abragende, vom Rinnengrund umgeschlagene angeformte Lasche aufweist, mit der die Crashbox an der Fahrzeugstruktur befestigt ist.

Mit dieser Lasche kann die Crashbox in einfacher Weise an der Fahrzeugstruktur befestigt, vorzugweise angeschraubt oder -geschweißt werden. Es entfallen zusätzliche Bauteile, mit denen die Crashbox an der Fahrzeugstruktur befestigt werden muss.

Es ist zudem bevorzugt vorgesehen, dass die Längserstreckung der Profilabschnitte parallel zur Fahrzeuglängsachse (x-Achse) gerichtet ist, wobei die von den Schenkeln und dem Rinnengrund gebildete Rinnenöffnung quer dazu, vorzugsweise zur Aufstandsebene des Kraftfahrzeugs hin, gerichtet ist.

Die Ausrichtung der Rinnenöffnung erfolgt also vorzugsweise parallel zur y-Achse oder z-Achse des Fahrzeuges, wobei besonders bevorzugt eine Ausrichtung parallel zur z-Achse, nämlich in Richtung der Aufstandsfläche des Fahrzeuges hin erfolgt, sodass sich weder Flüssigkeit noch Verschmutzungen in dem offenen Hohlprofilabschnitt ansammeln können und die Gefahr von Korrosion reduziert bzw. verhindert ist.

Auch ist bevorzugt vorgesehen, dass die rinnenartigen Profilabschnitte einen im Wesentlichen u-förmigen oder w-förmigen Querschnitt aufweisen.

Solche Profile weisen eine gute Steifigkeit bei geringem Eigengewicht auf und sind zudem kostengünstig herstellbar.

Vorzugsweise ist vorgesehen, dass die Enden der ersten Crashboxen stoffschlüssig oder kraftschlüssig mit dem ersten Querträger und/oder mit den Teilen der Fahrzeugstruktur verbunden sind.

Die Verbindung erfolgt dabei vorzugsweise durch ein Verschweißen oder Verschrauben.

Erfindungsgemäß ist vorgesehen, dass die Crashboxen samt Laschen jeweils einstückige Blechformteile aus Aluminium oder Stahl sind.

Auf diese Weise können Crashboxen mit hoher Steifigkeit bei geringem Eigengewicht kostengünstig hergestellt werden. Durch das Anformen der Lasche ist ein Befestigungselement für die Crashbox an dem Stoßfängerquerträger und ggf. auch an der Fahrzeugstruktur in die Crashbox integriert, sodass zusätzliche Halter am Querträger und ggf. Befestigungsmittel zur Befestigung der Crashbox an der Fahrzeugstruktur entfallen.

Um die Verformung der Crashboxen gezielt einzustellen, weisen die Profilabschnitte vorzugsweise im Rinnengrund Sicken als Deformationshilfe auf.

Aus dem gleichen Grund ist erfindungsgemäß vorgesehen, dass die Randkanten der Schenkelflächen einen Deformationsbeschnitt als Deformationshilfe aufweisen.

Vorzugsweise ist vorgesehen, dass die erste Stoßfängeranordnung im Bereich einer unteren Lastebene angeordnet ist, die parallel zur Aufstandsebene (xy-Ebene) des Kraftfahrzeugs ausgebildet ist, wobei eine zweite Stoßfängeranordnung im Bereich einer oberen Lastebene vorgesehen ist, die parallel zur unteren Lastebene und zur Aufstandsebene ausgebildet ist, wobei die obere Lastebene einen größeren Abstand zur Aufstandsebene aufweist, als die untere Lastebene, wobei die zweite Stoßfängeranordnung einen zweiten Stoßfängerquerträger aufweist und zwei weitere voneinander beabstandete zweite Crashboxen, deren jeweils eines Ende an einem der beiden endnahen Bereiche des zweiten Stoßfängerquerträgers befestigt ist und deren weiteres Ende an Teilen der Fahrzeugstruktur befestigt ist.

Die ersten Crashboxen der Stoßfängeranordnung der unteren Lastebene sind dabei vorzugsweise mit deren Rinnenöffnung nach unten, zur Aufstandsebene des Fahrzeuges hin ausgerichtet. Im Falle eines Aufpralls sind die ersten Crashboxen vorzugsweise vor der Verformung der zweiten Crashboxen in Fahrzeuglängsrichtung (x-Achse) gestaucht. Eine Bewegung der Crashboxen um die Fahrzeugquerachse (y-Achse) erfolgt dabei vorzugsweise nicht oder nur geringfügig, sodass ein abknicken der Crashboxen verhindert ist und eine optimale Energieaufnahme erfolgen kann. Der an den ersten Crashboxen befestigte erste Stoßfängerquerträger folgt dieser Bewegung.

Die Stoßfängeranordnung der oberen Lastebene kann einen im Stand der Technik bekannten Aufbau aufweisen. Alternativ kann auch die zweite Stoßfängeranordnung in der Art der ersten Stoßfängeranordnung ausgestaltet sein. Auch die zweite Stoßfängeranordnung weist dann die zur ersten Stoßfängeranordnung genannten Vorteile auf. Die zweiten Crashboxen werden im Falle eines Aufpralls erst dann verformt, wenn die ersten Crashboxen bereits um ein gewisses Maß in Fahrzeuglängsrichtung gestaucht sind. Durch diese nachgeordnete Verformung der zweiten Crashboxen ist insbesondere der Fußgängerschutz verbessert.

Besonders bevorzugt ist dabei vorgesehen, dass die ersten Crashboxen gegenüber den zweiten Crashboxen eine geringere Steifigkeit aufweisen.

Dies führt dazu, dass bei einem Aufprall zuerst die Stoßfängeranordnung im Bereich der unteren Lastebene verformt wird, bevor dann eine Verformung im Bereich der oberen Lastebene erfolgt.

Zusätzlich ist dabei besonders bevorzugt vorgesehen, dass der erste Stoßfängerquerträger und der zweite Stoßfängerquerträger durch Verbindungselemente, die vorzugsweise an den endnahen Bereichen beider Stoßfängerquerträger angeordnet sind, miteinander verbunden sind, da dadurch der erste Stoßfängerquerträger in einem Abstand zu dem zweiten Stoßfängerquerträger gehalten ist und nur eine gewisse Drehbewegung des ersten Stoßfängerquerträgers um die y-Achse ermöglicht und ein bloßes Abknicken der ersten Crashboxen samt Stoßfängerquerträger nach unten hin verhindert ist.

Ein Ausführungsbeispiel der erfindungsgemäßen Stoßfängeranordnung ist in den Figuren dargestellt und im Folgenden näher erläutert.

Es zeigt:
- Fig. 1: eine erste und eine zweite Stoßfängeranordnung in Ansicht;
- Fig. 2: eine Crashbox der Stoßfängeranordnung in Ansicht;
- Fig. 3: eine Crashbox der Stoßfängeranordnung in einer Ansicht.

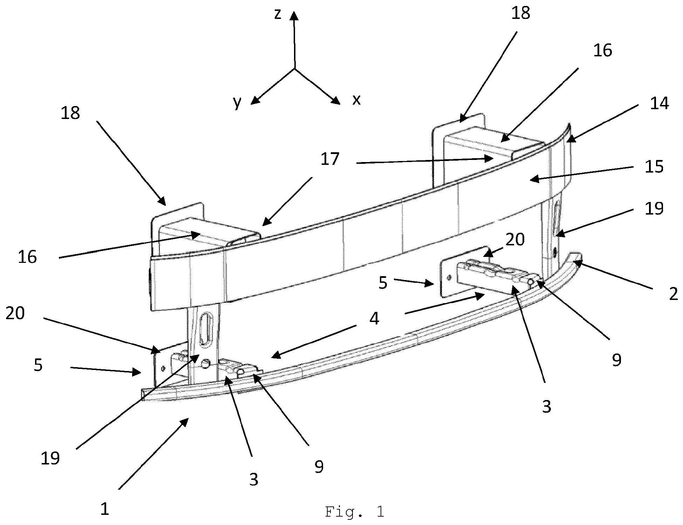

Die Figuren zeigen eine erste Stoßfängeranordnung 1 für ein Kraftfahrzeug, für eine untere Lastebene, die parallel zur Aufstandsebene (xy-Ebene) des Kraftfahrzeugs ausgebildet ist. Die Fahrzeugachsen sind in Fig. 1 gezeigt. Die erste Stoßfängeranordnung 1 weist einen ersten Stoßfängerquerträger 2 auf und zwei voneinander beabstandete erste Crashboxen 3, die jeweils mit einem ersten Ende 4 an einem der beiden endnahen Bereiche des Stoßfängerquerträgers 2 befestigt sind und die jeweils mit einem zweiten Ende 5 an Teilen der Fahrzeugstruktur befestigt sind. Die ersten Enden 4 der Crashboxen 3 sind stoffschlüssig mit dem ersten Querträger 2 verbunden. Die zweiten Enden 5 der Crashboxen 3 können mit eine Platte 20 an Teilen der Fahrzeugstruktur verschraubt werden.

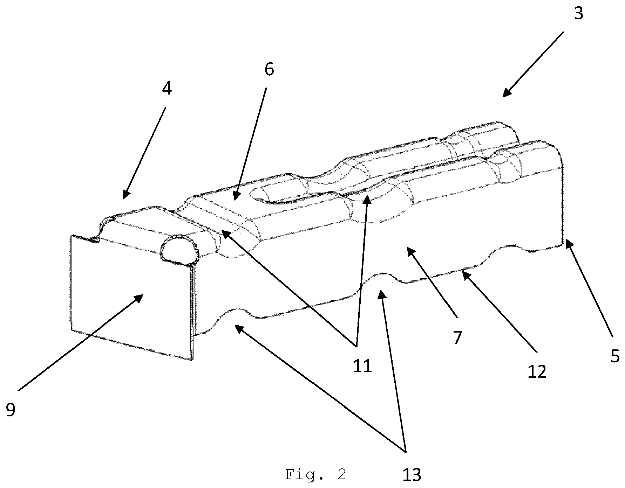

Die ersten Crashboxen 3 bestehen jeweils aus einem rinnenartigen Profilabschnitt mit einem Rinnengrund 6 und zwei davon quer abragenden Schenkeln 7,8, wobei jeder Profilabschnitt am stirnseitigen ersten Ende 4 eine quer abragende, vom Rinnengrund 6 um etwa 90° umgeschlagene angeformte Lasche 9 aufweist, wie es in Fig. 2 gezeigt ist. Mit der Lasche 9 ist die Crashbox 3 an dem Stoßfängerquerträger 2 verschweißt (Fig. 1). Die Längserstreckung der Profilabschnitte ist parallel zur Fahrzeuglängsachse (x-Achse) gerichtet, wobei die von den Schenkeln 7,8 und dem Rinnengrund 6 gebildete Rinnenöffnung 10 quer dazu, parallel zu z-Achse des Fahrzeuges, zur Aufstandsebene des Kraftfahrzeugs hin, gerichtet ist (Fig. 1), sodass sich weder Flüssigkeit noch Verschmutzungen in dem offenen Hohlprofilabschnitt ansammeln können und eine Korrosion reduziert oder sogar verhindert werden kann.

Eine zweite Stoßfängeranordnung 14 ist im Bereich einer oberen Lastebene angeordnet, die parallel zur unteren Lastebene und zur Aufstandsebene ausgebildet ist, wobei die obere Lastebene einen größeren Abstand zur Aufstandsebene aufweist, als die untere Lastebene, wobei die zweite Stoßfängeranordnung 14 einen zweiten Stoßfängerquerträger 15 aufweist und zwei weitere voneinander beabstandete zweite Crashboxen 16, deren eines Ende 17 an einem der beiden endnahen Bereiche des zweiten Stoßfängerquerträgers 15 befestigt ist und deren weiteres Ende 18 an Teilen der Fahrzeugstruktur befestigt ist.

Die in diesem Ausführungsbeispiel dargestellten Stoßfängeranordnungen 2,14 sind in der Weise ausgelegt, dass die in der unteren Lastebene angeordneten ersten Crashboxen bei einem Aufprall in Fahrzeuglängsrichtung (x-Achse) zuerst gestaucht werden, bevor die zweiten Crashboxen verformt werden. Ein Drehen der ersten Crashboxen um die Fahrzeugquerachse und ein bloßes Abknicken der Crashboxen im Lastfall, ist insbesondere durch die Rinnenform und die an den Rinnengrund angerformte Lasche nahezu vollständig verhindert. Der jeweils an den Crashboxen befestigte Stoßfängerquerträger folgt dieser Bewegung. Die nachgeordnete Verformung der Crashboxen wirkt sich beispielsweise vorteilhaft auf den Fußgängerschutz aus. Eine alternative Ausgestaltung kann erfolgen, um andere Kriterien zu erfüllen.

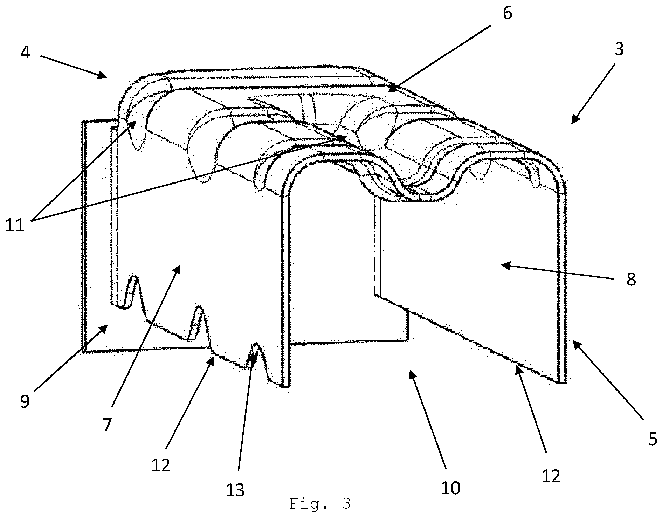

In diesem Ausführungsbeispiel ist es vorgesehen, dass die ersten Crashboxen 3 mit deren dem Rinnengrund 6 gegenüberliegend angeordneten Öffnungen 10 nach unten, zur Aufstandsebene des Fahrzeuges hin ausgerichtet sind. Die vom Rinnengrund 6 umgeschlagene Lasche 9 der ersten Crashboxen 3 ragt seitlich über die Flächen der Schenkel 7,8 vor, was Fig. 3 zeigt. Bei einem Aufprall wird die Lasche 9 stirnseitig gegen den Profilabschnitt, insbesondere gegen die Schenkel 7,8 der Crashboxen 3 gedrückt, sodass diese durch die einwirkende Kraft verformt und in Richtung zum Fahrzeug hin verformt werden. Durch die rinnenartige Form der Profilabschnitte, deren jeweilige Rinnenöffnung 10 zur Aufstandsebene hin gerichtete ist und die an den Rinnengrund angeformten Laschen 9, wird bei einem Aufprall die Stauchung der Crashboxen in Fahrzeuglängsrichtung (x-Achse) unterstützt und die Drehung der Crashbox 3 um die y-Achse des Fahrzeuges gesteuert.

Zusätzlich weisen die ersten Crashboxen 3 gegenüber den zweiten Crashboxen 16 eine geringere Steifigkeit auf, sodass bei einem Aufprall zuerst die erste Stoßfängeranordnung 1 im Bereich der unteren Lastebene verformt wird, bevor dann eine Verformung im Bereich der oberen Lastebene erfolgt.

Zudem sind der erste Stoßfängerquerträger 2 und der zweite Stoßfängerquerträger 15 durch Verbindungselemente 19 miteinander verbunden. Diese sind jeweils an beiden endnahen Bereichen der Stoßfängerquerträger 2,15 angeordnet und halten den ersten Stoßfängerquerträger 2 in einem Abstand zu dem zweiten Stoßfängerquerträger 15, sodass bei einem Aufprall zusätzlich die Drehung des ersten Stoßfängerquerträgers 2 um die y-Achse des Fahrzeuges unterstützt und ein bloßes Abknicken der ersten Crashboxen 3 nach unten verhindert ist.

Ein weiterer Vorteil, der sich aufgrund der Rinnenform des Hohlprofil, im Vergleich zu den im Stand der Technik bekannten Crashboxen, die eine geschlossene Profilform aufweisen, ergibt, liegt darin, dass Material und somit Gewicht eingespart werden können. Die Profilabschnitte weisen erfindungsgemäß einen teils u-förmigen und einen teils w-förmigen Querschnitt auf, wobei der w-förmige Abschnitt durch eine Sicke 11 im Rinnengrund 6 ausgebildet ist. Durch diese Form weisen die Profilabschnitte eine gute Steifigkeit bei geringem Eigengewicht auf und sind kostengünstig herstellbar.

Die Crashboxen 3 samt Laschen 9 sind Blechformteile aus Aluminium oder Stahl, wobei die Laschen 9 an den Rinnengrund 6 angeformt sind, sodass eine besonders einfache und kostengünstige Anbindung der Crashbox 3 an den Stoßfängerquerträger 2 erfolgen kann. Bei der Herstellung des Querträgers 2 kann auf eine Anbringung einer Halterung für die Crashboxen 3 verzichtet werden, da diese direkt mit der Lasche 9 am Querträger 2 befestigt werden können.

Um die Verformung der Crashboxen 3 gezielt einzustellen und zu verbessern, weisen die Profilabschnitte im Rinnengrund 6 Sicken 11 als Deformationshilfe aufweisen.

Aus dem gleichen Grund weisen die Randkanten 12 der Schenkel 7,8 einen Deformationsbeschnitt 13 als Deformationshilfe auf.

## Patentansprüche

1. Kraftfahrzeug mit mindestens einer Stoßfängeranordnung, wobei eine erste Stoßfängeranordnung (1) einen ersten Stoßfängerquerträger (2) aufweist und mindestens zwei voneinander beabstandete erste Crashboxen (3), die jeweils mit einem ersten Ende (4) an einem der beiden endnahen Bereiche des Stoßfängerquerträgers (2) befestigt sind und die jeweils mit einem zweiten Ende (5) an Teilen der Fahrzeugstruktur befestigt sind, wobei jede Crashbox (3) jeweils aus einem rinnenartigen Profilabschnitt mit einem Rinnengrund (6) und zwei davon quer abragenden Schenkeln (7,8) bestehen, wobei jeder Profilabschnitt mindestens am stirnseitigen ersten Ende (4) eine quer abragende Lasche (9) aufweist, mit der die Crashbox (3) an dem Stoßfängerquerträger (2) befestigt ist, **dadurch gekennzeichnet, dass** die ersten Crashboxen (3) samt Laschen (9) jeweils einstückige Blechformteile aus Aluminium oder Stahl sind, wobei die Laschen (9) vom Rinnengrund umgeschlagen und an diese angeformt sind und die Stirnseiten der Schenkel (7,8) zumindest abdecken oder seitlich über die Flächen der Schenkel (7,8) vorragen, wobei die Profilabschnitte einen teils u-förmigen und einen teils w-förmigen Querschnitt aufweisen, wobei der w-förmige Abschnitt durch eine erste Sicke (11) im Rinnengrund (6) ausgebildet ist, wobei die Profilabschnitte im Rinnengrund (6) zweite Sicken (11') als Deformationshilfe aufweisen, die quer zu der ersten Sicke (11) gerichtet sind.

2. Kraftfahrzeug nach Anspruch 1, **dadurch gekennzeichnet, dass** jeder Profilabschnitt am stirnseitigen zweiten Ende (5) eine quer abragende, vom Rinnengrund umgeschlagene angeformte zweite Lasche aufweist, mit der die Crashbox (3) an der Fahrzeugstruktur befestigt ist.

3. Kraftfahrzeug nach Anspruch 1 oder 2, **dadurch gekennzeichnet, dass** die Längserstreckung der Profilabschnitte parallel zur Fahrzeuglängsachse (x-Achse) gerichtet ist, wobei die von den Schenkeln (7,8) und dem Rinnengrund (6) gebildete Rinnenöffnung (10) quer dazu, vorzugsweise zur Aufstandsebene des Kraftfahrzeugs hin, gerichtet ist.

4. Kraftfahrzeug nach einem der Ansprüche 1 bis 3,
**dadurch gekennzeichnet, dass** die Enden (4,5) der ersten Crashboxen (3) stoffschlüssig oder kraftschlüssig mit dem ersten Querträger (2) und/oder mit den Teilen der Fahrzeugstruktur verbunden sind.

5. Kraftfahrzeug nach einem der Ansprüche 1 bis 4,
**dadurch gekennzeichnet, dass** die Randkanten (12) der Schenkelflächen einen Deformationsbeschnitt (13) als Deformationshilfe aufweisen.

6. Kraftfahrzeug nach einem der Ansprüche 1 bis 5,
**dadurch gekennzeichnet, dass** die erste Stoßfängeranordnung (1) im Bereich einer unteren Lastebene angeordnet ist, die parallel zur Aufstandsebene (xy-Ebene) des Kraftfahrzeugs ausgebildet ist, wobei eine zweite Stoßfängeranordnung (14) im Bereich einer oberen Lastebene vorgesehen ist, die parallel zur unteren Lastebene und zur Aufstandsebene ausgebildet ist, wobei die obere Lastebene einen größeren Abstand zur Aufstandsebene aufweist, als die untere Lastebene, wobei die zweite Stoßfängeranordnung (14) einen zweiten Stoßfängerquerträger (15) aufweist und zwei weitere voneinander beabstandete zweite Crashboxen (16), deren jeweils eines Ende (17) an einem der beiden endnahen Bereiche des zweiten Stoßfängerquerträgers (15) befestigt ist und deren weiteres Ende (18) an Teilen der Fahrzeugstruktur befestigt ist.

7. Kraftfahrzeug nach Anspruch 6, **dadurch gekennzeichnet, dass** die ersten Crashboxen (3) gegenüber den zweiten Crashboxen (16) eine geringere Festigkeit aufweisen.

8. Kraftfahrzeug nach Anspruch 6 oder 7, **dadurch gekennzeichnet, dass** der erste Stoßfängerquerträger (2) und der zweite Stoßfängerquerträger (15) durch Verbindungselemente (19), die vorzugsweise an den endnahen Bereichen beider Stoßfängerquerträger (2 und 15) angeordnet sind, miteinander verbunden sind.

## Claims

1. A motor vehicle with at least one bumper assembly, a first bumper assembly (1) having a first bumper crossbeam (2) and at least two first crash boxes (3) spaced apart from each other, each of which is attached with a first end (4) to one of the two end regions close to the end of the bumper crossbeam (2) and each of which is attached with a second end (5) to parts of the vehicle structure, each crash box (3) consisting of a groove-like profile section with a groove bottom (6) and two legs (7, 8) projecting transversely therefrom, each profile section having at least one transversely projecting tab (9) at the front first end (4), with which the crash box (3) is attached to the bumper crossbeam (2), **characterized by that** the first crash boxes (3) and tabs (9) are each one-piece sheet metal parts made of aluminum or steel, the tabs (9) being folded over from the groove bottom and molded onto it, and at least covering the front sides of the legs (7, 8) or extending laterally beyond the surfaces of the legs (7, 8), the profile sections having a partly u-shaped and partly w-shaped cross-section, the w-shaped section being formed by a first bead (11) in the groove bottom (6), the profile sections having second beads (11') in the groove bottom (6) as deformation aids, which are directed transversely to the first bead (11).

2. The motor vehicle of claim 1, **characterized by that** each profile section has a second tab at the front-side second end (5), which protrudes transversely and is bent over at the groove bottom, and with which the crash box (3) is attached to the vehicle structure.

3. The motor vehicle of claim 1 or 2, **characterized by that** the longitudinal extension of the profile sections is directed parallel to the longitudinal axis of the vehicle (x-axis), the groove opening (10) formed by the legs (7, 8) and the groove bottom (6) being directed transversely thereto, preferably toward the contact surface of the motor vehicle.

4. The motor vehicle of one of claims 1 to 3, **characterized by that** the ends (4, 5) of the first crash boxes (3) are connected to the first cross member (2) and/or to the parts of the vehicle structure in a material-locking manner or in a force-locking manner.

5. The motor vehicle of one of claims 1 to 4, **characterized by that** the peripheral edges (12) of the leg surfaces have a deformation cut (13) as a deformation aid.

6. The motor vehicle of one of claims 1 to 5, **characterized by that** the first bumper assembly (1) is arranged in the area of a lower load plane, which is formed parallel to the contact plane (xy-plane) of the motor vehicle, a second bumper assembly (14) being provided in the area of an upper load plane, which is formed parallel to the lower load plane and to the contact plane, the upper load plane being at a greater distance from the contact plane than the lower load plane, the second bumper assembly (14) having a second bumper crossbeam (15) and two further second crash boxes (16) spaced apart from each other, one end (17) of each being attached to one of the two regions of the second bumper crossbeam (15) close to the end and the other end (18) of which being attached to parts of the vehicle structure.

7. The motor vehicle of claim 6, **characterized by that** the first crash boxes (3) have a lower strength than the second crash boxes (16).

8. The motor vehicle of claim 6 or 7, **characterized by that** the first bumper crossbeam (2) and the second bumper crossbeam (15) are connected to each other by connecting elements (19), which are preferably arranged at the regions of both bumper crossbeams (2 and 15) close to the end.

## Revendications

1. Véhicule automobile avec au moins un ensemble pare-chocs, un premier ensemble pare-chocs (1) comportant une première traverse pare-chocs (2) et au moins deux premiers absorbeurs de choc (3) espacés l'un de l'autre, qui sont fixés chacun par une première extrémité (4) à l'une des deux zones proches des extrémités de la traverse pare-chocs (2) et qui sont fixés chacun par une deuxième extrémité (5) à des parties de la structure du véhicule, chaque absorbeur de choc (3) étant constitué d'une section profilée en forme de gouttière avec un fond de la gouttière (6) et deux ailes (7, 8) en saillie transversale s'étendant transversalement à partir de celui-ci, chaque section profilée présentant au moins à la première extrémité frontale (4) une languette (9) s'étendant transversalement, avec laquelle l'absorbeur de choc (3) est fixé à la traverse pare-chocs (2), **caractérisé en ce que** les premiers absorbeurs de choc (3) et leurs languettes (9) sont des pièces monoblocs en tôle d'aluminium ou d'acier, les languettes (9) étant repliées depuis le fond de la gouttière et moulées sur celle-ci, et au moins recouvrant les faces frontales des branches (7, 8) ou dépassant latéralement des surfaces des branches (7, 8), les sections profilées présentant une section transversale en partie en forme d'u et en partie en forme de w, la section en forme de w étant formée par une première nervure (11) dans le fond de la gouttière (6), les sections profilées présentant dans le fond de la gouttière (6) des deuxièmes nervures (11') qui sont orientées transversalement par rapport à la première nervure (11) et servent d'aide à la déformation.

2. Véhicule automobile selon la revendication 1, **caractérisé en ce que** chaque section de profilé présente, à la deuxième extrémité frontale (5), une deuxième languette saillante transversalement, repliée du fond de la gouttière, à l'aide de laquelle l'absorbeur de choc (3) est fixé à la structure du véhicule.

3. Véhicule automobile selon la revendication 1 ou 2, **caractérisé en ce que** l'extension longitudinale des sections profilées est orientée parallèlement à l'axe longitudinal du véhicule (axe x), l'ouverture de la gouttière (10) formée par les branches (7, 8) et le fond de la gouttière (6) étant orientée transversalement par rapport à celui-ci, de préférence vers le plan d'appui du véhicule automobile.

4. Véhicule automobile selon une des revendications 1 à 3, **caractérisé en ce que** les extrémités (4, 5) des premiers absorbeurs de choc (3) sont reliées par adhérence ou par friction à la première traverse (2) et/ou aux parties de la structure du véhicule.

5. Véhicule automobile selon une des revendications 1 à 4, **caractérisé en ce que** les bords périphériques (12) des surfaces des branches présentent une découpe de déformation (13) servant d'aide à la déformation.

6. Véhicule automobile selon une des revendications 1 à 5, **caractérisé en ce que** le premier ensemble pare-chocs (1) est disposé dans la zone d'un plan de charge inférieur qui est parallèle au plan d'appui (plan xy) du véhicule automobile, un deuxième ensemble pare-chocs (14) étant prévu dans la zone d'un plan de charge supérieur, qui est formé parallèlement au plan de charge inférieur et au plan d'appui, le plan de charge supérieur présentant un écart plus important par rapport au plan d'appui que le plan de charge inférieur, le deuxième ensemble pare-chocs (14) présentant une deuxième traverse pare-chocs (15) et deux autres deuxièmes absorbeurs de choc (16) espacés l'un de l'autre, dont une extrémité (17) est fixée à l'une des deux zones proches des extrémités de la deuxième traverse pare-chocs (15) et dont l'autre extrémité (18) est fixée à des parties de la structure du véhicule.

7. Véhicule automobile selon la revendication 6, **caractérisé en ce que** les premiers absorbeurs de choc (3) présentent une résistance inférieure à celle des deuxièmes absorbeurs de choc (16).

8. Véhicule automobile selon la revendication 6 ou 7, **caractérisé en ce que** la première traverse pare-chocs (2) et la deuxième traverse pare-chocs (15) sont reliées entre elles par des éléments de liaison (19) qui sont disposés de préférence au niveau des zones proches des extrémités des deux traverses pare-chocs (2 et 15).
